## Europäisches Patentamt
## European Patent Office
## Office européen des brevets

(19)

(11) Veröffentlichungsnummer: **0 011 211**
**B1**

(12)

# EUROPÄISCHE PATENTSCHRIFT

(45) Veröffentlichungstag der Patentschrift:
02.03.83

(21) Anmeldenummer: 79104312.8

(22) Anmeldetag: 05.11.79

(51) Int. Cl.³: **C 08 J 9/42,** C 08 L 75/04,
C 08 K 3/34

(54) Flammwidriger Schaumstoff und ein Verfahren zu seiner Herstellung.

(30) Priorität: 16.11.78 DE 2849649

(43) Veröffentlichungstag der Anmeldung:
28.05.80 Patentblatt 80/11

(45) Bekanntmachung des Hinweises auf die Patenterteilung:
02.03.83 Patentblatt 83/9

(84) Benannte Vertragsstaaten:
AT BE CH DE FR GB IT NL SE

(56) Entgegenhaltungen:
DE-A-2 506 274
DE-A-2 649 222
DE-B-2 031 160

Die Akte enthält technische Angaben, die nach dem Eingang der Anmeldung eingereicht wurden und die nicht in dieser Patentschrift enthalten sind.

(73) Patentinhaber: BAYER AG, Zentralbereich Patente, Marken und Lizenzen, D-5090 Leverkusen 1, Bayerwerk (DE)

(72) Erfinder: Illger, Hans-Walter, Dr., Im Tentefeld 27, D-5064 Rösrath (DE)
Erfinder: Dahm, Manfred, Dr., Am Falkenberg 29, D-5090 Leverkusen 31 (DE)
Erfinder: Gonzalez-Dörner, Alberto Carlos, Dr., c/o Metzeler Inespo Carretera B 140 a, Polinyá Sentmenat km 6, Barcelona (ES)

EP 0 011 211 B1

## Flammwidriger Schaumstoff und ein Verfahren zu seiner Herstellung

Schaumstoffe auf Basis von Polyisocyanaten, z.B. Polyurethan-, Polyisocyanurat- oder Polycarbodiimid-Schaumstoffe, sind bekannt und finden weite Anwendung. Hauptherstellungsverfahren sind die kontinuierliche Blockverschäumungsmethode sowie die Verschäumung in Formen.

Es hat nicht an Versuchen gefehlt, die bekannten Eigenschaften dieser Schaumstoffe zu verbessern. So ist z. B. zur Verbesserung der Flammwidrigkeit von Polyurethan-Schaumstoffen in der Literatur das Einarbeiten von festen und flüssigen Flammschutzmitteln während der Verschäumungsreaktion beschrieben. Durch solche Maßnahmen können die Flammschutzeigenschaften allerdings nur geringfügig verbessert werden. Da es sich bei diesen Flammschutzmitteln um artfremde, größtenteils nicht mitreagierende, oft nicht lösliche und um viskositätssteigernde Materialien handelt, weisen die so hergestellten Schaumstoffe oft schlechtere mechanische Eigenschaften als die nicht flammgeschützten Schaumstoffe auf. Flüssige Flammschutzmittel beeinflussen aufgrund ihres basischen oder sauren Charakters die Schaumreaktion und sind somit nicht in jeder beliebigen Proportion und/oder Rezeptur zu verarbeiten. Feste Flammschutzmittel lassen sich nur durch erhöhten technischen Aufwand verschäumen, da sie in einem ersten Schritt angepastet werden müssen und dadurch bedingt nicht mit jedem Dosieraggregat gefördert werden können.

Aus diesen Gründen sowie infolge des negativen Einflusses auf die mechanischen Eigenschaften der fertigen Schaumstoffe sind sie in der Proportion zu den restlichen Reaktanten limitiert. Zudem stellt der größte Teil der bekannten Flammschutzmittel Halogen- oder Halogenphosphorverbindungen dar, die im Falle eines Brandes giftige und/oder korrosive Gase entwickeln und somit die Gefahrenmomente nicht beheben, sondern nur verlagern.

Man hat auch schon versucht, durch Imprägnierung die mechanischen und die Flammschutzeigenschaften von Schaumstoffen zu verbessern. So beschreibt die US-A 2 955 056 ein Verfahren zur Imprägnierung von leichten Schaumstoffen mit Lösungen von härtbaren Polyurethanen. Das Verfahren erlaubt zwar die Herstellung von Schaumstoffen mit verbesserten mechanischen Eigenschaften, hat jedoch den großen Nachteil, daß organische Lösungsmittel mitverwendet werden müssen, die verfahrenstechnisch schwierig zu handhaben sind, da sie oftmals brennbar oder leicht entflammbar sind und mit Luft explosive Gasgemische geben und auch physiologisch nicht unbedenklich sind. Ferner zeigen die so imprägnierten Schaumstoffe den Nachteil, daß durch die Verwendung des organischen Lösungsmittels zunächst eine unerwünschte Quellung erfolgt, wonach bei Verdampfung des Lösungsmittels oft ein geschrumpfter Schaumstoff mit verklebter Zellstruktur zurückbleibt.

In der GB-A 977 929 wird die Imprägnierung von Schaumstoffen mit Füllstoff enthaltendem Polychloroprenlatex zwecks Flammschutz beschrieben. Als nachteilig erweist sich hierbei der hohe Halogengehalt der Flammschutzmischung und die daraus resultierende hohe Rauchgasdichte, die zur Haftung der Imprägniermasse erforderliche Schwefelvernetzung sowie der in vielen Fällen noch nicht ausreichende Flammschutz.

Wie der DE-C 2 031 160 zu entnehmen ist, lassen sich die mechanischen Eigenschaften, Lichtechtheit und Flammwidrigkeit von offenzelligen Schaumstoffen mit niedrigem Raumgewicht verbessern, wenn sie mit wäßrigen Dispersionen von hart, elastisch oder weich eingestellten Polyurethan-Kunststoffen imprägniert werden. In dieser Patentschrift wird auch die Mitverwendung von Füllstoffen in allgemeiner Form beschrieben. Es hat sich nun gezeigt, daß ein besonders wertvoller Füllstoff das Aluminiumoxidhydrat ist; seine Verwendung wird in der DE-C jedoch nicht gelehrt.

Die DE-A 26 49 222 beschreibt das Eindringen eines wäßrigen Polymer-Latex in einen bereits vorgefertigten Schaum. Aus dieser DE-A ist nicht ersichtlich, daß Polyurethan-Latices eingesetzt werden sollen. Die Polymer-Latices sollen ein teilchenförmiges, flammhemmendes Additiv enthalten, z. B. hydratisiertes Aluminiumoxid. Die Mitverwendung eines Alumosilikats im Polymer-Latex wird jedoch nicht gelehrt.

Überraschenderweise wurde gefunden, daß durch die Imprägnierung von Polyurethanschaumstoffen mit einer im wesentlichen aus einem Aluminiumoxidhydrat, einem Polyurethanlatex und Mischungsstabilisatoren bestehenden Dispersion Schaumstoffe erzielt werden, die sehr gute mechanische Eigenschaften sowie ausgezeichnete, nicht voraussehbare Flammschutzeigenschaften besitzen. Insbesondere letzterer Effekt ist um so überraschender, als man erwartet hätte, daß durch die Verdünnung des Aluminiumoxidhydrats mit einem halogenfreien, an sich brennbaren Polyurethan-Latex die guten Flammschutzeigenschaften zumindest stark herabgesetzt worden wären.

Gegenstand der vorliegenden Erfindung ist somit ein flammwidriger Schaumstoff, der eine Imprägnierung mit einer wäßrigen Dispersion, bestehend im wesentlichen aus einem Polyurethan-Latex, einem Aluminiumoxidhydrat, oberflächenaktiven Substanzen und einem Alumosilikat, aufweist, wobei die wäßrige Dispersion einen Feststoffgehalt von 25—80 Gew.-% hat und der Feststoffanteil des Polyurethanlatex an der gesamten wäßrigen Dispersion zwischen 1 und 20 Gew.-% beträgt und das Aluminiumoxidhydrat in einer Menge von 15 bis 75 Gew.-% und das Alumosilikat in einer Menge von 0,1 bis 5 Gew.-% in der wäßrigen Dispersion enthalten ist.

Erfindungsgemäß bevorzugt ist ein Schaumstoff, der dadurch gekennzeichnet ist, daß der zum Imprägnieren verwendete Schaumstoff eine Rohdichte zwischen 10 und 100 kg/m³ aufweist, daß die Feststoffaufnahme des imprägnierten Schaumstoffs zwischen 10 bis 800%, vorzugsweise 15 bis 500%, des ursprünglichen Schaumgewichts beträgt und daß der Gehalt der Trockenauflage an Aluminiumoxidhydrat zwischen 10 und 95 Gew.-% liegt.

Gegenstand der Erfindung ist auch ein Verfahren zur Herstellung eines flammwidrigen Schaumstoffs, in dem ein Schaumstoff mit einer wäßrigen Dispersion, bestehend im wesentlichen aus einem Polyurethan-Latex, einem Aluminiumoxidhydrat, oberflächenaktiven Substanzen und einem Alumosilikat, wobei die wäßrige Dispersion einen Feststoffgehalt von 25—80 Gew.-% hat und der Feststoffanteil des Polyurethanlatex an der gesamten wäßrigen Dispersion zwischen 1 und 20 Gew.-% beträgt und das Aluminiumoxidhydrat in einer Menge von 15 bis 75 Gew.-% und das Alumosilikat in einer Menge von 0,1 bis 5 Gew.-% in der wäßrigen Dispersion enthalten ist, vollständig imprägniert oder besprüht wird oder daß die Dispersion mittels Vakuum in den Schaumstoff eingesaugt oder mit einem Rakel in den Schaumstoff eingedrückt wird.

Bevorzugt ist ein Verfahren, das dadurch gekennzeichnet ist, daß man Latices von solchen Polyurethanen verwendet, die in homogener Form mindestens eine Härte Shore A von 5 und höchstens eine Pendelhärte von 240 aufweisen.

Besonders bevorzugt ist ein Verfahren, das dadurch gekennzeichnet ist, daß man Schaumstoffe auf Isocyanatbasis, insbesondere Polyurethanschaumstoffe, verwendet.

Das erfindungsgemäße Verfahren besitzt beträchtliche Vorteile:

A) Die Imprägnierung mit der wäßrigen Polyurethan-Dispersion erfolgt bei Raumtemperatur, während die Aushärtung bei jeder beliebigen höheren Temperatur vorgenommen werden kann, solange nicht der Trägerschaumstoff in Mitleidenschaft gezogen wird.

B) Da Träger der Dispersion Wasser ist, bilden sich bei dem Aushärtungsvorgang weder brennbare noch mit Luft explosive Gasgemische, so daß ein Arbeiten in explosionsgeschützten Vorrichtungen nicht notwendig ist. Auch besteht von der physiologischen Seite her keine Gefährdung.

C) Durch die Imprägnierung bleibt die Offenzelligkeit der Schaumstoffe erhalten.

D) Der zu verwendende Polyurethan-Latex haftet, ohne daß er reaktive Gruppen enthält und ohne daß zusätzliche Haftvermittler verwendet werden müssen, außerordentlich fest auf dem Schaumstoff. Der Zusatz von Vernetzungsmitteln bzw. Vulkanisationsmitteln ist nicht unbedingt erforderlich, da der auf der Schaumoberfläche entstehende Film nicht klebt.

E) Eingebrachte Füllstoffe werden durch die zäh-elastische Umhüllung mit dem Polyurethan aus der Dispersion fest verankert. Auch bei vibrierender mechanischer Belastung tritt keine Staubbildung auf.

F) Die bevorzugt verwendeten kationischen oder anionischen wäßrigen Polyurethan-Dispersionen können aufgrund einer mehr oder weniger ausgeprägten Elektrolyt-Empfindlichkeit beim Imprägnierungsvorgang im Schaumstoff in gezielter Weise koagulierend gefällt werden, ohne daß irgendeine Verklebung der Zellen erfolgt. Diese Variante der Imprägnierung gestattet es, das Latex-Serum weitgehend als Wasser schon beim Imprägnierungsvorgang mechanisch auszuquetschen, wobei sich eine technisch besonders einfache Verfahrensweise der Schaumstoffmodifizierung ergibt und ferner Wärmeenergie zur Verdampfung des Wassers in hohem Maße eingespart werden kann.

G) Das erfindungsgemäße Verfahren ermöglicht überraschenderweise die Herstellung lichtechter offenzelliger Schaumstoffe aus lichtempfindlichen vergilbenden zellförmigen Substraten. Dabei gelangen bevorzugt Polyurethan-Dispersionen zum Einsatz, die auf der Grundlage aliphatischer, cycloaliphatischer oder araliphatischer Polyisocyanate hergestellt sind, z. B. bevorzugt Hexamethylendiisocyanat, Trimethyl-hexamethylendiisocyanat, Diisocyanatomethylcyclobutan, Isophorondiisocyanat.

H) Das erfindungsgemäße Verfahren ermöglicht bei seiner Anwendung auf Polyurethanflocken oder Polyurethanschaumstoffabfällen unter gleichzeitiger Formgebung bei mäßigem oder höherem Druck die Herstellung zellförmiger Formteile, Plattenware, elastischer oder halbharter bis harter Gegenstände der verschiedensten geometrischen Formen.

I) Je nach Aufbau der dispergierten Polyurethane, insbesondere in Abhängigkeit von Gehalt an ionischen Gruppen läßt sich die Hydrophilie und Hydrophobie der Schaumstoffe wunschgemäß einstellen.

J) Zur Brandschutzausrüstung brauchen die Schaumstoffrezepturen nicht verändert zu werden; insbesondere tritt keine Verschlechterung der mechanischen Eigenschaften des Schaumstoffs durch den Zusatz von flammhemmenden Mitteln ein.

K) Der Brandschutz kann gezielt an besonders gefährdeten Stellen, z. B. an der Oberfläche bzw. an bestimmten Teilen der Oberfläche aufgebracht werden (bekanntlich weisen häufig selbst sog. unbrennbare Schaumstoffe noch einen untragbar starken, wenn auch nur kurzzeitigen Oberflächenabbrand auf).

L) Überraschenderweise ergeben Dispersionen mit minimalem Halogengehalt außerordentlich guten Flammschutz bei sehr niedrigen Rauchdichtewerten.

3

M) Infolge ihrer ausgezeichneten Haftung lassen sich die bevorzugten ionomeren Polyurethan-Latices bei ihrem Einsatz zur Imprägnierung als ausgezeichnete Fixiermittel und Haftvermittler für weitere Zusatzstoffe wie Pigmente, Farbstoffe, Graphit, Ruß, Titandioxid, biocid und bakterizid wirkende Verbindungen, desodorierende Mittel, die Blutgerinnung hemmende Mittel, die verschiedensten Metallpulver wie Aluminium, Kupfer, Eisen, Zink oder Mangan, verwenden.

Die für das erfindungsgemäße Verfahren geeigneten Polyurethan-Dispersionen sind an sich bekannt.

Beispiele für die Herstellung von wäßrigen Polyurethan-Dispersionen finden sich in den DE-B 1 097 678, 1 187 012, 1 184 946, 1 178 586, 1 179 363, in den DE-A 1 770 068, 1 939 911, 1 943 975, in den BE-A 653 223, 658 026, 669 954, 673 432, 727 923 und 688 299, in der GB-A 883 568, in den FR-A 1 108 785, 1 410 546 und in den US-A 3 178 310 und 3 410 817.

Für das erfindungsgemäße Verfahren sind besonders emulgatorfrei aufgebaute Dispersionen geeignet, wobei insbesondere emulgatorfreie Dispersionen von Polyurethan-Ionomeren, speziell von anionischen Polyurethanen, z. B. mit Sulfonat- und Carboxylat-Gruppen oder von kationischen Polyurethanen, z. B. mit quartären Ammonium-Gruppen, bevorzugt sind.

Die Herstellung von kationischen Polyurethan-Dispersionen wird z. B. in der DE-A 1 595 602 sowie in der DE-A 1 495 693 und in der DE-B 1 300 175 beschrieben.

Die Herstellung von anionischen Polyurethan-Dispersionen ist z. B. aus den DE-A 1 495 745, 1 544 892 und 2 035 732 bekannt.

Erfindungsgemäß ist es bevorzugt, zur Erhöhung der Lichtechtheit Dispersionen von solchen Polyurethan-Ionomeren zu verwenden, die auf der Grundlage von Hexamethylendiisocyanat, Isophorondiisocyanat und/oder m- und Xylylendiisocyanat hergestellt worden sind.

Die Anwesenheit eines organischen Lösungsmittels beim Vermischen des Polyurethans mit Wasser unter Bildung einer Dispersion ist nicht Bedingung. Sofern die Polyurethanmasse zum Zeitpunkt ihrer Vermischung mit Wasser bei der Arbeitstemperatur rührbar bzw. maschinentechnisch verarbeitbar ist, kann auf die Anwesenheit eines Lösungsmittels weitgehend oder sogar ganz verzichtet werden. Nach einem besonders bevorzugten und außerordentlich wirtschaftlichen Verfahren werden Polyurethan-Dispersionen lösungsmittelfrei durch Polykondensation von reaktiven Endgruppen aufweisenden Oligourethanelektrolyten mit Formaldehyd-Spendern im wäßrigen Zweiphasensystem hergestellt. Dabei wird der gegebenenfalls Methylolgruppen aufweisende Oligourethanelektrolyt bevorzugt in Form der Schmelze durch einfaches Vermischen mit Wasser dispergiert. Dieses Verfahren, nach welchem erfindungsgemäß gut geeignete Dispersionen hergestellt werden können, ist ausführlich in der BE-PS 730 543 beschrieben. Nach einem besonders bevorzugten Verfahren werden hierbei Oligourethanprepolymere mit endständigen Isocyanatgruppen (ca. 0,8 bis 10% NCO) mit Harnstoff oder einer anderen aminoplastischen Verbindung umgesetzt, die so gebildeten gegenüber Formaldehyd zumindest bifunktionellen Prepolymeren nach einer der literaturbekannten oder der oben beschriebenen Methoden ionisch modifiziert und durch Vermischen mit Wasser dispergiert. Formaldehyd bzw. solchen abgebende Verbindungen werden vor, während oder im Anschluß an die Disperdierung zugesetzt.

Üblicherweise wird die Polykondensation zum hochmolekularen Polyurethan zumindest anteilig in der Dispersion durch thermische Nachbehandlung und/der pH-Erniedrigung durchgeführt. Dispersionen von Aluminiumoxidhydrat in so vorkondensierte Polyurethandispersionen wird dann zur Schaumstoffimprägnierung verwendet. Es ist jedoch auch möglich, die Polykondensation erst auf dem Substrat und/oder im Anschluß an die Trocknung durch Wärmeeinwirkung oder auch Lagerung bei Raumtemperatur zu bewirken.

Ganz besonders geeignet sind kationische Dispersionen, die im Feststoff mehr als 5%, vorzugsweise 7 bis 20% Stickstoff enthalten. Zur Erzeugung ionischer Gruppen wird besonders vorteilhaft anteilig Phosphorsäure als Salzbildner eingesetzt.

Für das erfindungsgemäße Verfahren sind generell alle elastischen Schaumstoffe geeignet, wie beispielsweise weiche Polyvinylchloridschaumstoffe, Latexschaumstoffe und Naturschwämme. Insbesondere sind Schaumstoffe auf Isocyanatbasis, insbesondere Polyurethanschaumstoffe, geeignet.

Die Polyurethanschaumstoffe werden nach dem bekannten Isocyanat-Polyadditionsverfahren aus Verbindungen mit mehreren aktiven Wasserstoffatomen, insbesondere Hydroxyl- und/oder Carboxylgruppen enthaltenden Verbindungen und Polyisocyanaten, gegebenenfalls unter Mitverwendung von Wasser, Aktivatoren, Emulgatoren, Schaumstabilisatoren und anderen Zusatzstoffen seit langem in technischem Maßstabe hergestellt (R. Vieweg, A. Höchtlein, Kunststoff-Handbuch, Band VII, Polyurethane, Hanser-Verlag, München, 1966).

Polyurethan, Polyisocyanurat- und Polycarboddimid-Schaumstoffe werden vorzugsweise durch Vermischen flüssiger Komponenten hergestellt, wobei man die mit einander umzusetzenden Ausgangsmaterialien entweder gleichzeitig zusammenmischt oder aber zunächst aus einer Polyhydroxylverbindung wie Polyalkylenglykoläthern oder Hydroxylgruppen aufweisenden Polyestern mit einem Überschuß an Polyisocyanat ein NCO-Gruppen enthaltendes Voraddukt herstellt, welches dann in einem zweiten Arbeitsgang mit Wasser in den Schaumstoff überführt wird.

Die Ausgangsmaterialien der erfindungsgemäß zu verwendenden Schaumstoffe auf Isocyanatbasis sind z. B. in High Polymers, Vol. XVI, »Polyurethanes, Chemistry and Technology«, verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966 z. B. auf den Seiten 45 bis 71, beschrieben.

Beispiele von gegebenenfalls bei der Schaumstoffherstellung mitzuverwendenden Katalysatoren, oberflächenaktiven Zusatzstoffen und Schaumstabilisatoren sowie Zellreglern, Reaktionsverzögerern, Stabilisatoren, flammhemmenden Substanzen, Weichmacher, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z. B. auf den Seiten 103 bis 113 beschrieben.

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-A 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München, 1966, z. B. auf den Seiten 121 bis 205, beschrieben.

Die erfindungsgemäß zur Imprägnierung des Schaumstoffs verwendete (wäßrige) Dispersion (oder Suspension) hat einen Feststoffgehalt von 25 bis 80 Gew.-%, vorzugsweise von 35 bis 65 Gew.-%. Die Zusammensetzung der Dispersion richtet sich im wesentlichen nach dem gewünschten Flammschutz. Neben den genannten Polyurethan-Latices, deren Feststoffanteil an der gesamten wäßrigen Flammschutzmischung zwischen 1 und 20 Gew.-%, vorzugsweise zwischen 2 und 15 Gew.-%, ausmacht, wird Aluminiumoxidhydrat in handelsüblichen Teilchengrößen (so z. B. $<100\,\mu$) und mit üblichem Wassergehalt (z. B. 35 Gew.-% Wasser) in Konzentrationen von 15 bis 75 Gew.-% (bezogen auf die wäßrige Dispersion), vorzugsweise in Konzentrationen von 30 bis 60 Gew.-%, eingesetzt. Um die Einarbeitung des Aluminiumoxidhydrats zu erleichtern und die Dispersion lagerstabil zu halten, werden geeignete oberflächenaktive Substanzen (im allgemeinen 1 bis 20 Gew.-%, bezogen auf die wäßrige Dispersion), wie z. B. äthoxylierte Alkylphenole und/oder sulfierte Netzmittel wie Alkylsulfonate, und 0,1 bis 5 Gew.-% (bezogen auf die wäßrige Dispersion) geeigneter Alumosilikate zugesetzt. Um eine zu starke Schaumbildung zu vermeiden, können außerdem Silikonemulsionen zugesetzt werden.

Zusätzlich zu Aluminiumoxidhydrat können auch noch andere flammhemmende und/oder die Carbonisierung fördernde Verbindungen, z. B. Stärke, Dicyandiamid, Halogenkohlenwasserstoffe und/oder Halogenphosphorverbindungen und/oder Phosphorverbindungen, wie Pentabromtoluol und Antimontrioxid, in Mengen von 0,1 bis 30 Gew.-% zugesetzt werden. Außer den bisher genannten Bestandteilen der Dispersion kann diese noch weitere Zusätze, wie z. B. Pigmente oder Alterungsschutzmittel, enthalten. Selbstverständlich müssen die Bestandteile der Dispersion insgesamt miteinander verträglich sein und dürfen sich in ihrer Wirkung nicht beeinträchtigen.

Die Menge der Dispersion, mit der der zu imprägnierende Schaumstoff behandelt wird, richtet sich im wesentlichen nach den Anforderungen hinsichtlich des gewünschten Flammschutzes. Im allgemeinen wird der Schaumstoff mit einer solchen Menge der Dispersion behandelt, daß seine Feststoffaufnahme 10 bis 800%, vorzugsweise 15 bis 500%, des ursprünglichen Schaumgewichtes beträgt.

Die Durchführung des erfindungsgemäßen Verfahrens gestaltet sich einfach. Der offenporige, weiche Schaumstoff oder Schwamm wird z. B. durch Zusammenpressen und anschließendes Entspannen in der oben beschriebenen Dispersion beladen, die überflüssige Menge abgequetscht und der imprägnierte Schaumstoff bei Raumtemperatur oder bei Temperaturen oberhalb Raumtemperatur, vorzugsweise oberhalb 100°C ausgehärtet. Die Aushärtezeit hängt dabei ab von der Aushärtetemperatur und ist um so kürzer, je höher die Temperatur ist. Es ist auch möglich, die Imprägnierung kontinuierlich zu gestalten; hierzu wird der Schaumstoff in der oben beschriebenen Dispersion mittels Walzen zusammengequetscht und außerhalb der Lösung die überschüssige Menge an Dispersion wiederum mittels Walzen abgequetscht. Der imprägnierte Schaumstoff durchläuft alsdann zum Aushärten einen Ofen. Sowohl nach dem diskontinuierlichen als auch nach dem kontinuierlichen Verfahren ist es möglich, durch wiederholte Preß- und Entspannungsvorgänge in der Dispersion die Menge der oben beschriebenen Dispersion, die in und auf dem Schaumstoffgerüst niedergeschlagen ist, zu erhöhen.

Nach einer weiteren Verfahrensvariante wird die Imprägnierung direkt unter Formgebung gegebenenfalls an Schaumstoff-Flocken und ihre Verformung und Verklebung bei Normaldruck oder erhöhtem Druck ausgeführt, wobei elastische oder harte Formkörper, Plattenware oder in kontinuierlicher Weise zylindrische hochelastische Rollen hergestellt werden können.

Nicht nur durch Tauchen, sondern auch durch Besprühen kann die Imprägnier-Dispersion auf den Schaumstoff aufgebracht werden. Dieses Verfahren besitzt den Vorteil, daß beispielsweise in Formteilen durch lokale Behandlung so Zonen unterschiedlichen Flammschutzes erhalten werden können. Ein weiterer Vorteil des Sprühverfahrens ist, daß selbst kompliziert geformte Konturen, die aus weichen Schaumstoff-Folien gefertigt werden, nach dem erfindungsgemäßen Verfahren flammgeschützt werden können. Vorzugsweise können so fertige Formteile flammfest ausgerüstet werden.

Die besprühten Schaumstoffteile können, um ein tieferes Eindringen der Dispersion zu gewährleisten, sowohl mittels Druckluft als auch durch Walzenpaare behandelt werden. Eine weitere Möglichkeit des Aufbringens der Dispersion besteht darin, diese einzurakeln oder mittels Vakuum einzusaugen.

Die nach dem erfindungsgemäßen Verfahren hergestellten Schaumstoffe eignen sich für alle Einsatzgebiete, für die flammwidrige, weiche oder halbharte Schaumstoffe bislang verwendet werden, wie auf dem Gebiet der Polsterelementherstellung, Matratzenfertigung, der Wärmeisolation, der Schalldämmung, der Textilbeschichtung, der Verpackung und der Herstellung von Strukturelementen. Die neuen Schaumstoffe können im Anschluß an ihre Herstellung selbstverständlich auch weiter konfektioniert werden, indem man sie verformt, verpreßt, verschweißt oder mit Lösungen oder Dispersionen lufttrocknender Lacke, z. B. auf der Grundlage von Polyisocyanaten und Polyhydroxylverbindungen, überlackiert oder beschichtet.

Die nachfolgenden Beispiele dienen der näheren Erläuterung der Erfindung.

## Beispiel

Ein Polyurethanschaumstoff wurde erfindungsgemäß mit folgender Dispersion imprägniert:

| | |
|---|---|
| Aluminiumoxidhydrat | 140 Gew.-Teile |
| Polyurethan-Latex (40%ige wäßrige anionische Polyurethandispersion auf Basis eines Polyesters und Hexamethylendiisocyanat, hergestellt gemäß DE-OS 2 035 732) | 37,5 Gew.-Teile |
| Wasser | 112,5 Gew.-Teile |
| Alumosilikat (Bentone® LT, Handelsprodukt der Fa. Kronos-Titan) | 1,1 Gew.-Teile |
| Chlorparaffin, 55%ig in Wasser (Arubren®, Handelsprodukt der Fa. Bayer AG) | 2,0 Gew.-Teile |
| Polyglykoläther (in Wasser) | 5,0 Gew.-Teile |
| Natriumsalz einer Alkansulfonsäure, 30%ig in Wasser (Sulfopon® 102, Handelsprodukt der Fa. Henkel) | 5,0 Gew.-Teile |
| Reaktionsprodukt von Nonylphenol mit 9 Mol Äthylenoxid als Entschäumer, 20%ig in Wasser (Lavoral® 150, Handelsprodukt der Fa. Stockhausen) | 0,3 Gew.-Teile |
| Schwarzpigment | 0,5 Gew.-Teile |

Der Schaumstoff wurde nach dem Imprägnieren 45 Minuten bei ≈ 120° C getrocknet. In Tabelle I sind die mechanischen Eigenschaften, auch im Vergleich zu den unbehandelten, in Tabelle II das Brandverhalten wiedergegeben.

Tabelle I

Physikalische Eigenschaften

| | Nicht imprägniert | | Imprägnierter Schaumstoff | |
|---|---|---|---|---|
| | Vergleich | nicht gealtert | nach Ford-alterung (5 Tage, 90° C, 99% RF) | nach Autoklav-alterung (5 h, 120° C, 99% RF) |
| Rohdichte (kg/m$^3$) | 17 | 84 | | |
| Zugfestigkeit (kPa) | 75 | 137 | 124 | 126 |
| Bruchdehnung (%) | 135 | 168 | 224 | 186 |
| Stauchhärte (kPa) | 1,8 | 9,4 | 6,2 | 8,1 |

RF = Raumfeuchtigkeit.

Tabelle II

Brandschachttest (DIN 4102)

Klassifizierung B 1, falls die Prüfkörperdicke bei einer Auflage von 400% 15 mm nicht übersteigt (Rohdichte des nichtimprägnierten Schaumstoffes 20 kg/m$^3$).

Epiradiateurtest

| | |
|---|---|
| bei 200% Auflage: | M 2 |
| bei 400% Auflage: | M 1 |
| bei 400% Auflage nach Ford- oder Autoklavalterung: | M 1 |

(Dicke der Prüfkörper im letzteren Fall aus versuchstechnischen Gründen jedoch geringer als der Norm entsprechend.)

Rauchdichtemessung in NBS Kammer

max. spez. Rauchdichte ($D_m$)

| Ohne Zündflamme | Mit Zündflamme | Imprägnierter Schaumstoff (d = 13 mm) |
|---|---|---|
| 74 | 79 | — nicht gealtert |
| 69 | 55 | — nach Fordalterung |
| 68 | 78 | — nach Autoklavalterung |
| 147 | 86 | nicht imprägnierter Schaumstoff (d = 13 mm) |

**Patentansprüche**

1. Flammwidriger Schaumstoff, der eine Imprägnierung mit einer wäßrigen Dispersion, bestehend im wesentlichen aus einem Polyurethan-Latex, einem Aluminiumoxidhydrat, oberflächenaktiven Substanzen und einem Alumosilikat, aufweist, wobei die wäßrige Dispersion einen Feststoffgehalt von 25—80 Gew.-% hat und der Feststoffanteil des Polyurethanlatex an der gesamten wäßrigen Dispersion zwischen 1 und 20 Gew.-% beträgt und das Aluminiumoxidhydrat in einer Menge von 15 bis 75 Gew.-% und das Alumosilikat in einer Menge von 0,1 bis 5 Gew.-% in der wäßrigen Dispersion enthalten ist.

2. Schaumstoff gemäß Anspruch 1, dadurch gekennzeichnet, daß der zum Imprägnieren verwendete Schaumstoff eine Rohdichte zwischen 10 und 100 kg/m³ aufweist, daß die Feststoffaufnahme des imprägnierten Schaumstoffes zwischen 10 bis 800% des ursprünglichen Schaumgewichtes beträgt und daß der Gehalt der Trockenauflage an Aluminiumoxidhydrat zwischen 10 und 95 Gew.-% liegt.

3. Verfahren zur Herstellung eines flammwidrigen Schaumstoffs gemäß Ansprüchen 1 und 2, dadurch gekennzeichnet, daß ein Schaumstoff mit einer wäßrigen Dispersion, bestehend im wesentlichen aus einem Polyurethan-Latex, einem Aluminiumoxidhydrat, oberflächenaktiven Substanzen und einem Alumosilikat, wobei die wäßrige Dispersion einen Feststoffgehalt von 25—80 Gew.-% hat und der Feststoffanteil des Polyurethanlatex an der gesamten wäßrigen Dispersion zwischen 1 und 20 Gew.-% beträgt und das Aluminiumoxidhydrat in einer Menge von 15 bis 75 Gew.-% und das Alumosilikat in einer Menge von 0,1 bis 5 Gew.-% in der wäßrigen Dispersion enthalten ist, vollständig imprägniert oder besprüht wird oder daß die Dispersion mittels Vakuum in den Schaumstoff eingesaugt oder mit einem Rakel in den Schaumstoff eingedrückt wird.

4. Verfahren gemäß Anspruch 3, dadurch gekennzeichnet, daß man Latices von solchen Polyurethanen verwendet, die in homogener Form mindestens eine Härte Shore A von 5 bis höchstens eine Pendelhärte von 240 aufweisen.

5. Verfahren gemäß Anspruch 3, dadurch gekennzeichnet, daß als Schaumstoff ein solcher auf Isocyanatbasis eingesetzt wird.

6. Verfahren gemäß Anspruch 5, dadurch gekennzeichnet, daß als Schaumstoff ein Polyurethanschaumstoff eingesetzt wird.

7. Verfahren gemäß Ansprüchen 3 bis 6, dadurch gekennzeichnet, daß die Imprägnierung diskontinuierlich oder kontinuierlich durchgeführt wird.

## Claims

1. Flame resistant foam which is impregnated with an aqueous dispersion, consisting substantially of a polyurethane latex, an aluminium hydroxide, surface-active substances and an aluminosilicate, the aqueous dispersion having a solids content of 25—80% by weight and the solids content of the polyurethane latex being between 1 and 20% by weight of the total aqueous dispersion and the aluminium hydroxide being contained in the aqueous dispersion in an amount of 15 to 75% by weight and the aluminosilicate being contained in the aqueous dispersion in an amount of 0.1 to 5% by weight.

2. Foam according to Claim 1, characterised in that the foam used for impregnation has a gross density of between 10 and 100 kg/m³, in that the uptake of solids content of the impregnated foam is between 10 and 800% of the original weight of the foam and in that the quantity of dry application of aluminium hydroxide is between 10 and 95% by weight.

3. Process for the production of a flame resistant foam according to Claims 1 and 2, characterised in that a foam is completely impregnated or sprayed with an aqueous dispersion, consisting substantially of a polyurethane latex, an aluminium hydroxide, surface active substances and an aluminosilicate, the aqueous dispersion having a solids content of 25—80% by weight and the solids content of the polyurethane latex being between 1 and 20% by weight of the total aqueous dispersion and the aluminium hydroxide being contained in the aqueous dispersion in an amount of 15 to 75% by weight and the aluminosilicate being contained in the aqueous dispersion in an amount of 0.1 to 5% by weight, or in that the dispersion is sucked into the foam by means of a vacuum or pressed into the foam with a doctor knife.

4. Process according to Claim 3, characterised in that the latices used are of polyurethanes which in their homogeneous form have a Shore A hardness of at least 5 up to at the most a Pendulum hardness of 240.

5. Process according to Claim 3, characterised in that the foam used is one based on isocyanate.

6. Process according to Claim 5, characterised in that the foam used is a polyurethane foam.

7. Process according to Claims 3 to 6, characterised in that impregnation is carried out batchwise or continuously.

## Revendications

1. Mousse ignifuge imprégnée par une dispersion aqueuse consistant essentiellement en un latex de polyuréthanne, une alumine hydratée, des substances tensio-actives et un aluminosilicate, la dispersion aqueuse contenant de 25 à 80% en poids de substances solides et la proportion de substances solides du latex de polyuréthanne étant de 1 à 20% en poids par rapport à la dispersion aqueuse totale, l'alumine hydratée étant contenue en quantité de 15 à 75% en poids et l'alumino-silicate en quantité de 0,1 à 5% en poids dans la dispersion aqueuse.

**0 011 211**

2. Mousse selon la revendication 1, caractérisée en ce que la mousse utilisée pour l'imprégnation présente une densité apparente de 10 à 100 kg/m³, la quantité de substances solides absorbée par la mousse imprégnée représente de 10 à 800% du poids initial de la mousse et la teneur de la masse appliquée sèche en alumine hydratée est de 10 à 95% en poids.

3. Procédé de préparation d'un mousse ignifuge selon les revendications 1 et 2, caractérisé en ce que l'on imprègne complètement ou on pulvérise une mousse par une dispersion aqueuse consistant essentiellement en un latex de polyuréthanne, une alumine hydratée, des substances tensio-actives et un alumino-silicate, la dispersion aqueuse contenant de 25 à 80% en poids de substances solides et la teneur en substances solides du latex de polyuréthanne représentant de 1 à 20% en poids par rapport à la dispersion aqueuse totale, l'alumine hydratée étant contenue en quantité de 15 à 75% en poids et l'alumino-silicate en quantité de 0,1 à 5% en poids dans la dispersion aqueuse, ou bien encore on aspire la dispersion à l'aide du vide dans la mousse ou on fait pénétrer la dispersion dans la mousse à l'aide d'une racle.

4. Procédé selon la revendication 3, caractérisé en ce que l'on utilise des latex de polyuréthannes qui à l'état homogène, ont une dureté Shore A d'au moins 5 et une dureté au pendule de 240 au maximum.

5. Procédé selon la revendication 3, caractérisé en ce que l'on utilise une mousse à base d'isocyanate.

6. Procédé selon la revendication 5, caractérisé en ce que l'on utilise une mousse de polyuréthanne.

7. Procédé selon les revendications 3 à 6, caractérisé en ce que l'imprégnation est effectuée en discontinu ou en continu.

9